# EUROPÄISCHE PATENTANMELDUNG

(11) **EP 1 134 463 A2**
(43) Veröffentlichungstag der Anmeldung: **19.09.2001**
(21) Anmeldenummer: 01105673.6
(22) Anmeldetag: 07.03.2001
(51) Int. Cl.: F16J 15/08, F16B 5/06

(54) **Vorrichtung zum Anbringen einer Flachdichtung an einem Maschinenbauteil**

(30) Priorität: 17.03.2000 DE 10013130
(71) Anmelder: Elring Klinger AG, 72581 Dettingen (DE)
(72) Erfinder: Schwenkel, Kurt, 72584 Hülben (DE); Kullen, Wilhelm, 72584 Hülben (DE)
(74) Vertreter: Hoeger, Stellrecht & Partner

(57) **Zusammenfassung**

Flachdichtung (20A) mit einer Dichtungsplatte (26) zum Auflegen auf eine Dichtfläche (18A') eines Maschinenbauteils (18A), welches mindestens ein in diese Dichtfläche (18A') mündendes und sich ungefähr senkrecht zur Dichtfläche (18A') erstreckendes Loch (36) aufweist, wobei für ein verliersicheres Anbringen der Flachdichtung (20A) am Maschinenbauteil (18A) an der Dichtungsplatte (26) mindestens ein von dieser quer abstehendes und in das Loch (36) des Maschinenbauteils (18A) einsteckbares Sicherungselement (28) angeordnet ist, welches an seinem Umfang mit mindestens einem für ein Zusammenwirken mit dem Loch (36) derart ausgebildeten Vorsprung (44) versehen ist, daß dadurch ein Zurückziehen des Sicherungselements (28) aus dem Loch (36) zumindest erschwert wird.

## Beschreibung

Die Erfindung betrifft eine Vorrichtung zum Anbringen einer Flachdichtung an einem Maschinenbauteil, wobei die Flachdichtung eine Dichtungsplatte zum Auflegen auf eine Dichtfläche des Maschinenbauteils aufweist.

In den Montagelinien der Fahrzeugindustrie wäre es von Vorteil, wenn eine zwischen den Dichtflächen zweier Maschinenbauteile einzubauende Dichtung in einfacher Weise an einem der beiden Maschinenbauteile verliersicher angebracht und dann zusammen mit diesem Maschinenbauteil gehandhabt werden könnte. Werden die beiden Maschinenbauteile mittels Schrauben aneinander befestigt und dabei die Flachdichtung zwischen den Dichtflächen der beiden Maschinenbauteile eingespannt, kann das verliersichere Halten der Flachdichtung am einen Maschinenbauteil dadurch bewirkt werden, daß die besagten Schrauben in das eine Maschinenbauteil eingesteckt und durch Schraubenlöcher der Flachdichtung hindurchgesteckt oder durchgeschraubt werden, wobei es schon bekannt ist, die Schraubenlöcher der Flachdichtung mit Sicherungselementen zu versehen, welche in die Schraubengewinde eingreifen und dadurch ein Zurückziehen der Schrauben aus den Schraubenlöchern der Flachdichtung zumindest erschweren.

Der Erfindung lag nun die Aufgabe zugrunde, eine hinsichtlich ihres Aufbaus und ihrer Handhabung einfachere Sicherungseinrichtung zum Anbringen einer Flachdichtung an der Dichtfläche eines Maschinenbauteils zu schaffen, welche auch nicht auf ein Zusammenwirken mit Montageschrauben angewiesen ist.

Ausgehend von einer Flachdichtung mit einer Dichtungsplatte zum Auflegen auf eine Dichtfläche eines Maschinenbauteils, welches mindestens ein in diese Dichtfläche mündendes und sich ungefähr senkrecht zur Dichtfläche erstreckendes Loch aufweist, läßt sich diese Aufgabe erfindungsgemäß mit einer Vorrichtung zum Anbringen einer solchen Flachdichtung an einem solchen Maschinenbauteil lösen, welche gekennzeichnet ist durch mindestens ein an der Dichtungsplatte angreifendes, von dieser quer abstehendes und in das Loch des Maschinenbauteils einsteckbares Sicherungselement, welches an seinem Umfang mindestens einen Vorsprung aufweist, der für ein derartiges Zusammenwirken mit dem Loch des Maschinenbauteils ausgebildet ist, daß dadurch ein Zurückziehen des Sicherungselements aus diesem Loch zumindest erschwert wird. Wie sich aus dem Folgenden noch ergeben wird, kann es sich bei dem Sicherungselement um ein separates Teil handeln oder kann das Sicherungselement an der Dichtungsplatte der Flachdichtung fest angebracht sein.

Das Anbringen einer Flachdichtung an der Dichtfläche eines Maschinenbauteils derart, daß sie von letzterem unverlierbar gehalten wird, ist dann in einfacher Weise möglich, so daß das Handhaben zusätzlicher Elemente, wie z. B. von Schrauben, entfällt, weil die Flachdichtung nur noch auf das Maschinenbauteil aufgesteckt bzw. das Sicherungselement in die Flachdichtung und das Maschinenbauteil eingesteckt werden muß. In diesem Zusammenhang sei erwähnt, daß Maschinenbauteile, wie z. B. ein Ansaugrohr eines Verbrennungsmotors, welches an einem Zylinderkopf des Motors zu montieren ist, ohnehin stets mit Durchgangsbohrungen versehen werden muß, so daß es praktisch keines Mehraufwandes bedarf, bei der Bearbeitung eines solchen Maschinenbauteils ein zusätzliches Loch zum Einstecken des Sicherungselements der Flachdichtung herzustellen.

Der Vorsprung des erfindungsgemäßen Sicherungselements könnte z. B. widerhakenförmig und starr ausgebildet sein, so daß er sich beim Einstecken des Sicherungselements in das Loch des Maschinenbauteils geringfügig in die Lochwandung eingräbt und so ein Zurückziehen des Sicherungselements aus dem Loch erschwert; bei bevorzugten Ausführungsformen der erfindungsgemäßen Flachdichtung ist das Sicherungselement jedoch mindestens im Bereich des Vorsprungs entgegen derjenigen Richtung elastisch deformierbar, in welcher der Vorsprung über den sonstigen Umfang des Sicherungselements vorsteht.

Für eine gute formschlüssige Verankerung des Sicherungselements der Flachdichtung an dem in Rede stehenden Maschinenbauteil kann es sich empfehlen, das Loch des Maschinenbauteils mit einer abgestuften Wandung zu versehen, so daß das Loch im Abstand von der Dichtfläche des Maschinenbauteils eine von der Dichtfläche abgekehrte Anschlagfläche bildet, welche bei aufgesteckter Flachdichtung von dem Vorsprung des Sicherungselements hintergriffen wird. Wenn dann der senkrecht zur Flachdichtungsebene gemessene Abstand des Vorsprungs des Sicherungselements von der Dichtungsplatte gleich oder nur geringfügig größer ist als der Abstand der besagten Anschlagfläche von der Dichtfläche des Maschinenbauteils, wird die auf letzteres aufgesteckte Flachdichtung an dem Maschinenbauteil so gehalten, daß die Dichtungsplatte gegen die Dichtfläche des Maschinenbauteils anliegt. Handelt es sich bei dem Loch um eine Durchgangsbohrung des Maschinenbauteils, d. h. wird das Maschinenbauteil von dem Loch durchsetzt, so daß das Loch in eine von der Dichtfläche des Maschinenbauteils abgekehrte zweite Maschinenbauteilfläche mündet, wird man den Abstand des Vorsprungs des Sicherungselements von der Dichtungsplatte der Flachdichtung zweckmäßigerweise gleich groß oder nur geringfügig größer wählen als die Länge des Lochs zwischen der Dichtfläche des Maschinenbauteils und dessen zweiter Fläche.

Bei bevorzugten Ausführungsformen der erfindungsgemäßen Flachdichtung besitzt deren Sicherungselement zwei einander gegenüberliegende und voneinander wegweisende Vorsprünge, um die Sicherheit der Verbindung zwischen Flachdichtung und Maschinenbauteil noch weiter zu erhöhen.

Die Dichtungsplatte von Flachdichtungen besitzt im allgemeinen eine Blechlage - die letztere kann die Dichtungsplatte oder eine Lage einer mehrlagigen Metallagendichtung bilden, aber auch das Trägerblech einer sogenannten Weichstoffdichtung, welches ein- oder beidseitig mit einer Weichstoffauflage versehen ist. In diesen Fällen läßt sich das Sicherungselement besonders einfach herstellen - der von der Dichtungsplatte abstehende Bereich des Sicherungselements kann dann nämlich als Blechzunge ausgebildet werden. Bei einer ersten Art erfindungsgemäßer Flachdichtungen ist dann die Blechzunge mit der besagten Blechlage einstückig und aus letzterer herausgebogen, während bei einer zweiten Art erfindungsgemäßer Flachdichtungen die Blechzunge auch als separates Teil hergestellt und in geeigneter Weise an der Dichtungsplatte befestigt werden kann, z. B. durch Punktschweißen oder Kleben. Eine solche Blechzunge läßt sich schon beim Ausstanzen mit einem oder mehreren Vorsprüngen versehen, und bei bevorzugten Ausführungsformen der erfindungsgemäßen Flachdichtung hat die Blechzunge an ihrem freien Ende einen Kopfbereich, dessen Gestalt einer der folgenden Formen entspricht: Widerhakenform, Pfeilform, Pilzkopfform und Trapezform. Damit der Vorsprung bzw. die Vorsprünge des Sicherungselements quer zur Längsrichtung des Sicherungselements nachgeben kann bzw. können, um das Sicherungselement leicht in das Loch des Maschinenbauteils einstecken zu können, worauf der Vorsprung bzw. die Vorsprünge ihre Sicherungsfunktion entfalten, empfiehlt es sich, die Blechzunge in ihrer Längsrichtung zu schlitzen. Beim Einstecken der Blechzunge in das Loch des Maschinenbauteils können sich dann die Längsränder des Schlitzes der Blechzunge übereinanderschieben oder aber einander nähern, wenn die Längsränder des Schlitzes im Querabstand voneinander verlaufen.

Das Sicherungselement einer erfindungsgemäßen Flachdichtung kann aber nicht nur dem Zweck dienen, die Dichtung unverlierbar am Maschinenbauteil zu halten, sondern es ist auch möglich, das Sicherungselement so auszubilden, daß es die Flachdichtung am Maschinenbauteil exakt positioniert und Querkräfte aufnehmen kann; zu diesem Zweck bemißt man die maximale Breite eines zwischen der Dichtungsplatte und dem freien Endbereich des Sicherungselements liegenden Positionierbereichs des Sicherungselements, vorzugsweise eines an die Dichtungsplatte angrenzenden Fußes des Sicherungselements bzw. der Blechzunge entsprechend dem Querabstand derjenigen Wandbereich des Lochs des Maschinenbauteils, gegen welche der Positionierbereich bzw. der Fuß des Sicherungselements bzw. die Längsränder der Blechzunge anliegen sollen. Hat das Loch die Gestalt einer Bohrung und das Sicherungselement die Gestalt einer Blechzunge, kann die letztere die Flachdichtung nur in einer einzigen, zur Dichtungsplattenebene parallelen Richtung wirklich exakt positionieren; um die Flachdichtung in zwei zueinander senkrechten und parallel zur Dichtungsplattenebene verlaufenden Richtungen exakt zu positionieren, empfiehlt es sich in diesem Fall, am Maschinenbauteil zwei Löcher und an der Flachdichtung zwei Blechzungen vorzusehen, deren Ebenen quer zueinander und quer zur Dichtungsplattenebene verlaufen. Da grundsätzlich ein einziges Sicherungselement ausreicht, um die Flachdichtung unverlierbar am Maschinenbauteil zu halten, kann man für eine exakte Positionierung der Flachdichtung am Maschinenbauteil die Flachdichtung so ausbilden, daß an deren Dichtungsplatte eine von dieser quer abstehende und nur als Positionierelement dienende Blechzunge angeordnet ist, wobei die Sicherungselement-Blechzunge und die Positionierelement-Blechzunge jeweils eine Ebene definieren und diese beiden Ebenen ungefähr senkrecht zur Ebene der Dichtungsplatte sowie ungefähr senkrecht zueinander verlaufen und das Maschinenbauteil auch für die Positionierelement-Blechzunge ein Einsteckloch aufweist, bei dem es sich auch um ein einfaches Sackloch handeln kann. Da die Positionierelement-Blechzunge nur der Positionierung der Flachdichtung dienen muß, kann ihr freier Endbereich abgerundet sein, um das Einstecken dieser Blechzunge in das zugehörige Loch des Maschinenbauteils'zu erleichtern.

Erwähnt sei noch, daß die besagten Blechzungen zwischen ihrem Fuß und ihrem freien Ende auch um ihre Längsachsen z. B. um 90° verschränkt sein können und nicht flach und eben ausgebildet sein müssen.

An die Stelle einer Blechzunge als Sicherungselement kann auch ein hülsenartig gestaltetes Sicherungselement treten. Wenn die Hülse z. B. einen ovalen Querschnitt hat, kann sie sich beim Einstecken in das Loch des Maschinenbauteils so verformen, daß der maximale Hülsendurchmesser verkleinert wird und sich infolgedessen ein entsprechend angebrachter Vorsprung in das besagte Loch einführen läßt; bevorzugt werden jedoch Ausführungsformen, bei denen das Sicherungselement zwecks elastischer Verminderung seines Durchmessers in seinem mit dem Vorsprung versehenen Bereich in seiner Längsrichtung geschlitzt ist. Dabei kann die Hülse von ihrem dem Vorsprung benachbarten Ende her geschlitzt sein, es ist aber auch möglich, die Hülse von ihren beiden Enden her mit Schlitzen zu versehen, wobei die sich vom einen Hülsenende her in die Hülse hineinerstreckenden Schlitze gegenüber den sich vom anderen Hülsenende her in die Hülse hineinerstreckenden Schlitzen in Hülsenumfangsrichtung gegeneinander versetzt sind.

Ein solches hülsenartiges Sicherungselement läßt sich mit zwei oder mehr Blechzungen bilden, welche von der Dichtungsplatte abstehen und - senkrecht auf die Dichtungsplatte gesehen - einen ungefähr kreisbogenförmigen Querschnitt aufweisen. Bei anderen Ausführungsformen der erfindungsgemäßen Vorrichtung handelt es sich bei dem Sicherungselement um eine als separates Teil hergestellte Hülse, vorzugsweise um eine als Spritzgußteil hergestellte Kunststoff-Hülse.

Mit einer solchen, als separates Teil hergestellten Hülse lassen sich mehrere Ausführungsformen der erfindungsgemäßen Vorrichtung verwirklichen:

Die Hülse kann an der Dichtungsplatte fest angebracht und so in das Loch des Maschinenbauteils eingesteckt werden, daß der an der Hülse vorgesehene Vorsprung bzw. die an der Hülse vorgesehenen Vorsprünge eine vom Maschinenbauteil gebildete Anschlagfläche hintergreift bzw. hintergreifen.

Es ist aber auch möglich, die erfindungsgemäße Vorrichtung so auszubilden, daß die separate Hülse durch ein Loch der Dichtungsplatte hindurch in das Loch des Maschinenbauteils eingesteckt wird und die Hülse an ihren beiden Enden Vorsprünge aufweist, von denen der eine bzw. die einen die Dichtungsplatte und der andere bzw. die anderen eine Anschlagfläche des Maschinenbauteils hintergreift bzw. hintergreifen. Der bzw. die die Dichtungsplatte hintergreifende Vorsprung bzw. Vorsprünge darf bzw. dürfen die Abdichtfunktion der Flachdichtung natürlich nicht beeinträchtigen; um dies zu gewährleisten, muß die Dichtungsplatte eine den Vorsprung aufnehmende Aussparung, z. B. in Form einer Ansenkung, aufweisen und/oder der Vorsprung so gestaltet sein und aus einem solchen Material bestehen, daß er sich beim Anziehen, d. h. beim Einspannen der Flachdichtung zwischen zwei Dichtflächen, so verformen (verquetschen) läßt, daß er die Abdichtfunktion der Flachdichtung nicht beeinträchtigt. Wenn, wie dies häufig der Fall ist, die Dichtungsplatte mit einem elastomeren Material beschichtet ist, bedarf es aber unter Umständen keiner Verformbarkeit des die Dichtungsplatte hintergreifenden Vorsprungs der Hülse, da sich dieser beim Einspannen der Flachdichtung in die besagte Beschichtung einpressen kann. Wie sich aus dem folgenden noch ergeben wird, kann der Vorsprung bzw. können die Vorsprünge so gestaltet sein, daß die Dichtungsplatte von dem Vorsprung bzw. den Vorsprüngen nur partiell hintergriffen wird - im Falle nur eines einzigen Vorsprungs muß sich dieser nicht um das ganze Loch des Maschinenbauteils herum erstrecken, und im Falle mehrerer Vorsprünge können sich zwischen diesen (um das Loch herum) Lücken befinden.

Hülsenartige Sicherungselemente können auch dazu herangezogen werden, dem Einspannen der Flachdichtung dienende Schrauben aufzunehmen und so auszurichten, daß ihre Gewindeschäfte zumindest ungefähr senkrecht zur Dichtungsplatte der Flachdichtung verlaufen. Für diesen Fall empfiehlt es sich, das hülsenartige Sicherungselement so zu gestalten, daß es eine solche Schraube auch noch verliersicher halten kann, und zu diesem Zweck wird der Innendurchmesser des Sicherungselements partiell geringfügig kleiner gewählt als der Außendurchmesser des Gewindeschafts, so daß der Außendurchmesser des Gewindeschafts geringfügig größer ist als der lichte Innendurchmesser der Hülse.

Bei einem hülsenartigen Sicherungselement wird der Außendurchmesser im vorsprungsfreien Bereich der Hülse im allgemeinen geringfügig kleiner sein als der Durchmesser des Lochs des Maschinenbauteils und der Durchmesser des Lochs der Dichtungsplatte; vor allem dann, wenn ein solches hülsenartiges Sicherungselement der Aufnahme eines Gewindeschafts einer Schraube dienen soll, kann die Hülse aber auch nach Art eines Dübels an der Wand des Lochs des Maschinenbauteils verspannt werden, wenn die zunächst mit Spiel im Loch des Maschinenbauteils befindliche geschlitzte Hülse durch Eindrehen des Gewindeschafts in die Hülse aufgeweitet und so im Loch des Maschinenbauteils verspannt wird. In diesem Fall könnte sogar darauf verzichtet werden, die Hülse mit einem oder mehreren Vorsprüngen zu versehen, so daß auch solche Ausführungsformen als unter die vorliegende Erfindung fallend zu betrachten sind.

Weitere Verbesserungen der erfindungsgemäßen Vorrichtung ergeben sich aus den beigefügten Ansprüchen.

Im folgenden werden einige in der beigefügten Zeichnung dargestellte bevorzugte Ausführungsformen einer erfindungsgemäßen Vorrichtung beschrieben; in der Zeichnung zeigen:
- Fig. 1: eine schematische Stirnansicht eines als V-Motor ausgebildeten Verbrennungsmotors sowie eines an diesem Motor zu montierenden Ansaugrohrs mit zwei an diesem verliersicher gehaltenen Flachdichtungen;
- Fig. 2: einen Schnitt durch einen Teil eines Maschinenbauteils sowie einen Teil einer an diesem verliersicher gehaltenen Flachdichtung;
- Fig. 3: eine Draufsicht auf eine der in Fig. 1 gezeigten Flachdichtungen, wobei jedoch die an dieser Flachdichtung ausgebildeten Sicherungs- und Positionierelemente noch in der Ebene der Dichtungsplatte dieser Flachdichtung liegen;
- Fig. 4A und 4B: zwei weitere Ausführungsformen eines erfindungsgemäßen Sicherungselements;
- Fig. 5: einen der Fig. 2 entsprechenden Schnitt durch eine weitere Ausführungsform der erfindungsgemäßen Vorrichtung mit einem als Hülse ausgebildeten Sicherungselement;
- Fig. 6: eine Draufsicht auf das in Fig. 5 dargestellte Sicherungselement, gesehen in Richtung des Pfeils A aus Fig. 5;
- Fig. 7: eine der Fig. 5 entsprechende Darstellung einer weiteren Ausführungsform der erfindungsgemäßen Vorrichtung, welche von derselben Hülse Gebrauch macht wie die in Fig. 5 dargestellte Ausführungsform, jedoch unter anderer Verwendung der Hülse;
- Fig. 8: einen der Fig. 2 entsprechenden Schnitt durch eine weitere Ausführungsform der erfindungsgemäßen Vorrichtung, und
- Fig. 9: einen Schnitt durch diese Ausführungsform gemäß der Linie 9-9 in Fig. 8.

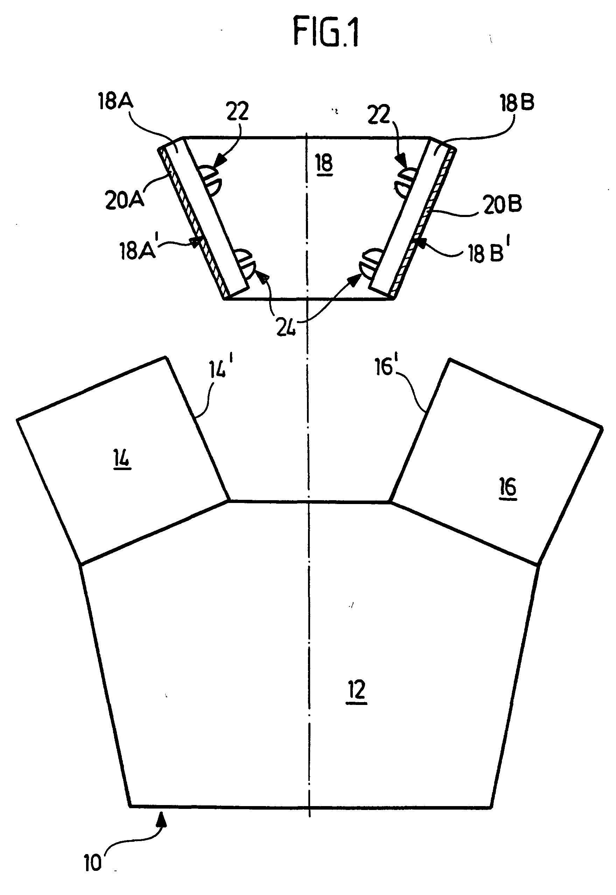

Die Fig. 1 zeigt einen als V-Motor ausgebildeten Verbrennungsmotor 10, bei dem es sich um einen V6-Motor handeln soll. Mit 12 wurde das Kurbelgehäuse des Motors bezeichnet, mit 14 der linke Zylinderkopf und mit 16 der rechte Zylinderkopf des Motors. Ferner zeigt die Fig. 1 schematisch ein Ansaugrohr 18, welches zwischen die Zylinderköpfe 14 und 16 einzufügen ist und einen linken sowie einen rechten Saugrohrflansch 18A bzw. 18B aufweist, welche mittels nicht dargestellter Schrauben am linken bzw. rechten Zylinderkopf 14 bzw. 16 zu befestigen sind. Gegeneinander abzudichtende Dichtflächen der Zylinderköpfe und der Saugrohrflansche wurden mit 14', 16', 18A' und 18B' bezeichnet. Am Saugrohrflansch 18A ist eine Flachdichtung 20A angebracht, am Saugrohrflansch 18B eine Flachdichtung 20B. Nach der Montage des Ansaugrohrs 18 an den Zylinderköpfen 14 und 16 ist die Flachdichtung 20A zwischen den Dichtflächen 18A' und 14' eingespannt, die Flachdichtung 20B zwischen den Dichtflächen 18B' und 16'. Jede der beiden Flachdichtungen 20A und 20B verfügt über zwei Sicherungselemente 22 und 24, mit deren Hilfe die Flachdichtungen unverlierbar an den Saugrohrflanschen gehalten und gegebenenfalls auch positioniert werden, wie sich aus dem Folgenden noch ergeben wird.

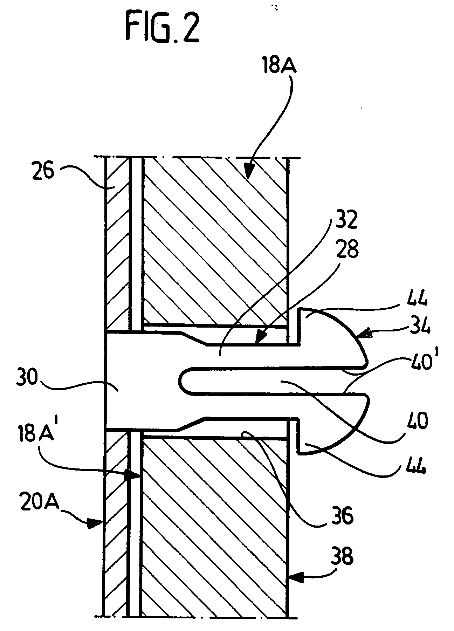

Die Fig. 2 zeigt einen Schnitt durch einen Teil des Saugrohrflansches 18A sowie durch einen Teil der Flachdichtung 20A. Bei der Flachdichtung 20A soll es sich um eine einlagige Metallblechdichtung handeln, deren gegen die Dichtfläche 18A' des Saugrohrflansches 18A anzulegende Dichtungsplatte mit 26 bezeichnet wurde. Mit dieser Dichtungsplatte 26 einstückig ist eine ein erfindungsgemäßes Sicherungselement 28 bildende Blechzunge, welche durch teilweises Ausstanzen aus der Dichtungsplatte 26 gebildet und sodann rechtwinklig aus der Dichtungsplatte herausgebogen wurde; das Sicherungselement 28 hat einen an die Dichtungsplatte 26 angrenzenden Fuß 30, einen gegenüber dem Fuß verjüngten Hals 32 und einen das freie Ende des Sicherungselements bildenden Kopfbereich 34.

Für den Eingriff des Sicherungselements 28 besitzt der Saugrohrflansch 18A ein Loch 36, bei dem es sich um eine Durchgangsbohrung handeln soll, welche sich von der Dichtfläche 18A' bis zu einer zweiten, gegenüberliegenden Fläche 38 des Saugrohrflansches erstreckt; bei dem Loch 36 könnte es sich aber auch um eine z. B. schlitzförmige Öffnung im Saugrohrflansch 18A handeln.

Die Breite des Fußes 30 des Sicherungselements 28 ist nur geringfügig kleiner als der Durchmesser des Lochs 36, während die maximale Breite des Kopfbereichs 34 größer ist als der Lochdurchmesser. Damit sich der Kopfbereich 34 durch das Loch 36 hindurchstecken läßt, ist das Sicherungselement 28 mit einem Längsschlitz 40 versehen, dessen Längsränder 40' in einem solchen Querabstand voneinander verlaufen, daß sich der Kopfbereich 34 des Sicherungselements 28 unter elastischer Verformung des Halses 32 durch das Loch 36 hindurchschieben läßt. Damit der Fuß 30 des Sicherungselements 28 gewährleisten kann, daß die Flachdichtung 20A am Saugrohrflansch 18A exakt positioniert ist, empfiehlt es sich, den Längsschlitz 40 vor dem Fuß 30 enden zu lassen.

Um das Einschieben des Sicherungselements 28 in das Loch 36 zu erleichtern, ist der Kopfbereich 34 des Sicherungselements an seinem gemäß Fig. 2 rechten Ende abgerundet. Damit die Flachdichtung 20A verliersicher am Saugrohrflansch 18A gehalten wird, bildet der Kopfbereich 34 zwei einander gegenüberliegende und in entgegengesetzte Richtungen vorspringende Vorsprünge 44, welche widerhakenförmig ausgebildet sind, bei am Saugrohrflansch angebrachter Flachdichtung über das Loch 36 hinausragen und gegen die zweite Fläche 38 des Saugrohrflansches anliegen, wenn versucht würde, die Flachdichtung 20A vom Saugrohrflansch 18A abzuziehen. Bei der in Fig. 2 dargestellten Ausführungsform des Sicherungselements 28 ist dessen Kopfbereich ungefähr pilzkopfförmig gestaltet, er könnte aber auch Pfeilform haben oder die Gestalt eines einfachen Widerhakens aufweisen - in diesem Fall würde einer der Vorsprünge 44 entfallen, ebenso gegebenenfalls der Längsschlitz 40.

Das in Fig. 2 dargestellte Sicherungselement 28 ist so bemessen, daß der Abstand der Vorsprünge 44 von der Dichtungsplatte 26 nur geringfügig größer ist als der Abstand der Dichtfläche 18A' von der gegenüberliegenden Fläche 38 des Saugrohrflansches 18A. Anhand der Fig. 2 wird aber auch deutlich, daß das Sicherungselement 28 kürzer bemessen werden könnte, wenn es sich bei dem Loch 36 z. B. um eine abgestufte Bohrung handeln würde, welche sich für die Aufnahme des Kopfbereichs 34 erweitert und eine Anschlagfläche für die Vorsprünge 44 bildet. Ferner könnte es sich bei dem Loch 36 auch um ein in die Dichtfläche 18A' mündendes Sackloch handeln, an dessen Wandung sich das Sicherungselement verhakt - in diesem Fall wäre es zweckmäßig, den Kopfbereich 34 des Sicherungselements so zu modifizieren, daß er Pfeilform oder Widerhakenform besitzt.

Da der Fuß 30 des Sicherungselements 28 zumindest nahezu passend in das Loch 36 eingreift, durch den Längsschlitz 40 nicht geschwächt ist und an die Dichtungsplatte 26 der Flachdichtung 20A unmittelbar angrenzt, kann der Fuß 30 der Aufnahme von Querkräften dienen, durch welche sonst die Flachdichtung 20A gegenüber dem Saugrohrflansch 18A parallel zu dessen Dichtfläche 18A' verschoben werden würde.

Wie im folgenden noch gezeigt werden wird, könnte an die Stelle des Längsschlitzes 40 ein einfacher Schnitt treten, der es erlaubt, beim Einschieben des Sicherungselements 28 in das Loch 36 die beiden Teile des Halses 32 und des Kopfbereichs 34 übereinander zu schieben, um den Kopfbereich 34 durch das Loch 36 hindurchstecken zu können.

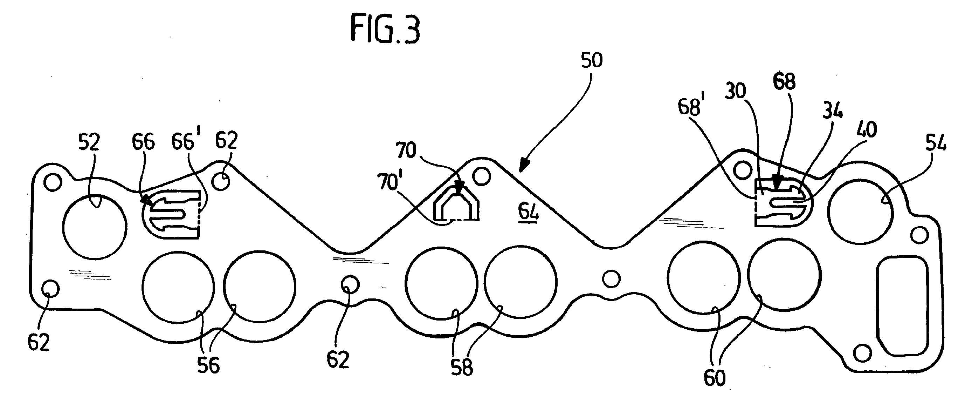

Die Fig. 3 zeigt eine erfindungsgemäße Flachdichtung 50 mit zwei Wasserdurchgangsöffnungen 52 und 54, jeweils zwei Ansaugöffnungen 56 bzw. 58 bzw. 60 für jeden der drei Zylinder des einen Zylinderkopfs sowie Schraubendurchgangsöffnungen 62 für diejenigen Schrauben, mit denen der eine Saugrohrflansch am einen Zylinderkopf montiert und dabei die Flachdichtung zwischen den Dichtflächen von Saugrohrflansch und Zylinderkopf eingespannt wird.

Auch bei der in Fig. 3 dargestellten Flachdichtung 50 soll es sich um eine einlagige Metallblechdichtung handeln; die Fig. 3 könnte aber auch eine Blechlage einer mehrlagigen Flachdichtung darstellen, so wie dies vorstehend bereits erläutert worden ist.

In der Dichtungsplatte 64 der Flachdichtung 50 wurden durch Anstanzen zwei als Blechzungen gestaltete Sicherungselemente 66 und 68 ausgebildet, welche in der Darstellung der Fig. 3 noch in der Ebene der Dichtungsplatte 64 liegen, vor der Montage der Dichtung jedoch rechtwinklig aus der Ebene der Dichtungsplatte herausgebogen werden - die Biegelinien wurden mit 66' bzw. 68' bezeichnet. Da die Sicherungselemente 66 und 68 im wesentlichen gleich ausgebildet sind wie das in Fig. 2 dargestellte Sicherungselement 28, bedarf es keiner weiteren Beschreibung der Sicherungselemente 66 und 68.

Da nach dem Herausbiegen der Sicherungselemente 66 und 68 aus der Dichtungsplatte 64 die beiden Ebenen, welche von den die Sicherungselemente bildenden Blechzungen definiert werden, parallel zueinander verlaufen, verfügt die in Fig. 3 dargestellte Flachdichtung 50 noch über ein Positionierelement 70, welches nicht dem verliersicheren Halten, sondern nur dem exakten Positionieren der Flachdichtung dienen soll. Auch bei dem Positionierelement 70 handelt es sich um eine aus der Dichtungsplatte 64 durch Anstanzen gewonnene Blechzunge, welche um eine Biegelinie 70' so aus der Ebene der Dichtungsplatte herausgebogen werden soll, daß die vom Positionierelement 70 definierte Ebene senkrecht zur Ebene der Dichtungsplatte 64 und senkrecht zu denjenigen Ebenen verläuft, welche die hochgebogenen Sicherungselemente 66 und 68 definieren. Selbstverständlich soll auch das Maschinenbauteil, an dem die Flachdichtung 50 anzubringen ist, also beispielsweise der Saugrohrflansch 18A, nicht nur für jedes der Sicherungselemente 66 und 68 ein dem in Fig. 2 dargestellten Loch 36 entsprechendes Loch aufweisen, sondern auch noch ein zusätzliches Loch für einen zumindest nahezu passenden Eingriff des hochgebogenen Positionierelements 70, dessen maximale Breite in der Nachbarschaft der Biegelinie 70' gleich oder nur geringfügig kleiner sein soll als der Durchmesser des zugehörigen Lochs und dessen freier Kopfbereich abgerundet oder jedenfalls so gestaltet ist, daß er sich zum Ende der Blechzunge hin verjüngt.

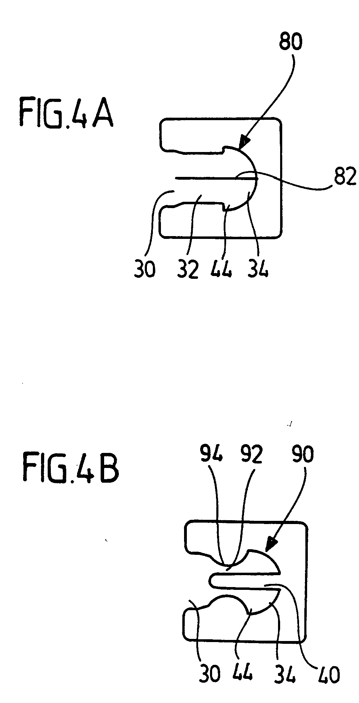

Die Figuren 4A und 4B zeigen noch zwei weitere Varianten eines erfindungsgemäßen Sicherungselements 80 bzw. 90. Das in Fig. 4A dargestellte Sicherungselement 80 unterscheidet sich von dem in Fig. 2 gezeichneten Sicherungselement 28 im wesentlichen nur dadurch, daß an die Stelle des Längsschlitzes 40 des Sicherungselements gemäß Fig. 2 ein einfacher Schnitt 82 tritt, so daß sich die beiden durch den Schnitt entstandenen Lappen des Sicherungselements 80 übereinanderschieben lassen, wenn das Sicherungselement in ein Loch des zugehörigen Maschinenbauteils eingeführt wird. Die mit diesem Übereinanderschieben einhergehende Verformung der beiden Lappen soll jedoch möglichst eine elastische Verformung sein, so daß die beiden Lappen in ihre in Fig. 4A dargestellte Ausgangsposition zurückspringen, wenn der Kopfbereich des Sicherungselements 80 aus dem Maschinenbauteilloch heraustritt.

Das in Fig. 4B dargestellte Sicherungselement 90 unterscheidet sich von dem in Fig. 2 dargestellten Sicherungselement 28 im wesentlichen nur dadurch, daß der Hals 92 des Sicherungselements durch seitliche Ausschnitte 94 zusätzlich geschwächt wurde, um ein Zusammendrücken des Kopfbereichs des Sicherungselements zu erleichtern.

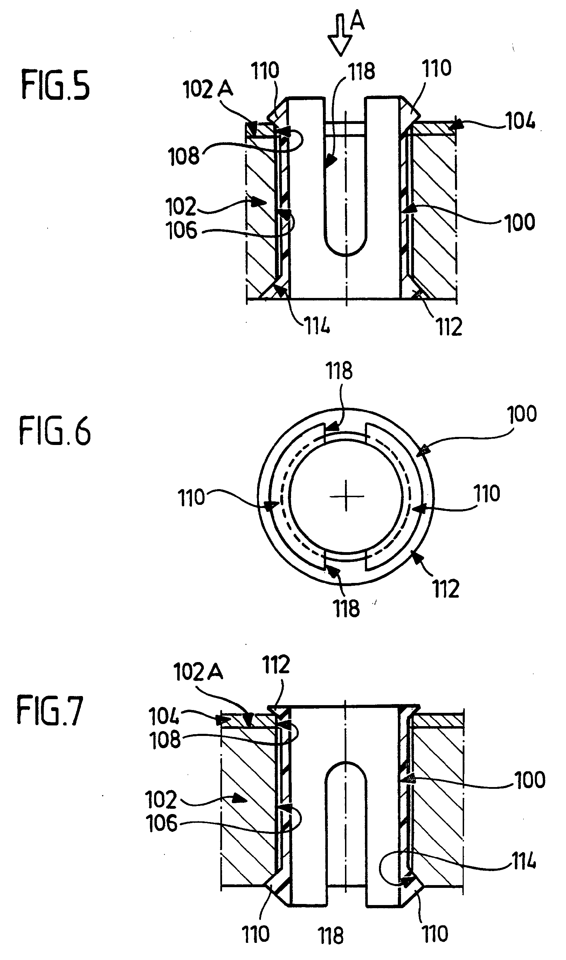

Die Figuren 5 und 6 zeigen eine Ausführungsform der erfindungsgemäßen Vorrichtung, bei der mindestens ein Sicherungselement als Hülse 100 gestaltet ist, bei der es sich zwar auch um eine metallische Hülse handeln könnte, die jedoch vorzugsweise als spritzgegossene Kunststoff-Hülse hergestellt wurde. Diese Hülse dient der Sicherung einer Flachdichtung an einem Maschinenbauteil 102, dessen Dichtfläche mit 102A bezeichnet wurde. Von der Flachdichtung sind in Fig. 5 nur Teile einer Dichtungsplatte 104 dargestellt. Für den Eingriff der Hülse 100 hat das Maschinenbauteil 102 ein als Durchgangsbohrung gestaltetes Loch 106 und die Dichtungsplatte 104 ein Loch 108, dessen Durchmesser vorzugsweise ungefähr gleich groß ist wie der Durchmesser des Lochs 106. An den Außenumfang der Hülse 100 sind im Bereich des einen Hülsenendes mehrere, im dargestellten Fall zwei einander diametral gegenüberliegende erste Vorsprünge 110 und im Bereich des anderen Hülsenendes mindestens ein zweiter Vorsprung 112 angeformt - bei diesem zweiten Vorsprung handelt es sich bei der dargestellten Ausführungsform um einen ringförmigen Bund oder Flansch. Bevorzugt ist das Loch 106 des Maschinenbauteils 102 in seinem von der Dichtfläche 102A abgewandten Endbereich mit einer Erweiterung 114 versehen, welche den zweiten Vorsprung 112 aufnehmen kann und für diesen einen Anschlag bildet. Zwischen den Vorsprüngen 110 und 112 ist der Außendurchmesser der Hülse 100 vorzugsweise nur ganz geringfügig kleiner als der lichte Durchmesser des Lochs 106.

Von ihrem ersten, gemäß Fig. 5 oberen Ende her (an das die ersten Vorsprünge 110 angeformt sind) ist die Hülse 100 in Längsrichtung geschlitzt, die Schlitze 118 erstrecken sich jedoch nur über einen Teil der Länge der Hülse 100.

Erfindungsgemäß sind die ersten Vorsprünge 110 zumindest an ihrer gemäß Fig. 5 oberen Seite so abgeschrägt, daß sich die Hülse 100 leicht gemäß Fig. 5 von unten in das Maschinenbauteil 102 und die Dichtungsplatte 104 einstecken läßt; hat die Hülse 100 ihre in Fig. 5 gezeigte Position erreicht, hintergreifen die ersten Vorsprünge 110 die Dichtungsplatte 104; ferner ist das gemäß Fig. 5 untere Hülsenende mit dem Maschinenbauteil 102 bündig.

Bei der in den Figuren 5 und 6 dargestellten Ausführungsform ist das Sicherungselement, nämlich die Hülse 100, nicht an der Flachdichtung bzw. deren Dichtungsplatte 104 fest angebracht; vielmehr bildet sie auch im eingebauten Zustand ein separates Teil. Weist bei dieser Ausführungsform das in Fig. 5 nicht dargestellte Maschinenbauteil, welches gegen die Dichtungsplatte 104 angepreßt werden soll, keine Aussparung oder kein Loch auf, welche bzw. welches denjenigen Bereich der Hülse 100 aufnehmen kann, der die Dichtungsplatte 104 überragt, muß die Hülse 100 so modifiziert werden, daß sie etwas kürzer ist als in Fig. 5 dargestellt und die Dichtungsplatte 104 nur mit ganz flachen ersten Vorsprüngen hintergreift, welche beim Einspannen der Flachdichtung durch das nicht dargestellte zweite Maschinenbauteil so verformt (verquetscht) werden können, daß sie die Abdichtfunktion der Flachdichtung nicht beeinträchtigen. Zu diesem Zweck kann es vorteilhaft sein, die ersten Vorsprünge (in Umfangsrichtung der Hülse gemessen) ganz kurz zu gestalten.

Für die in Fig. 7 dargestellte Ausführungsform der erfindungsgemäßen Vorrichtung wurden dieselben Bezugszeichen wie in den Figuren 5 und 6 verwendet, da sich die Ausführungsform nach Fig. 7 von derjenigen nach den Figuren 5 und 6 im wesentlichen nur dadurch unterscheidet, daß die Hülse 100 an der Dichtungsplatte 104 fest angebracht sein kann und gemäß Fig. 7 von oben in das Maschinenbauteil 102 eingesteckt wird. Allerdings muß bei der in Fig. 7 dargestellten Ausführungsform der zweite Vorsprung 112 gegebenenfalls so verformbar bzw. verquetschbar sein, daß er die Abdichtfunktion der Flachdichtung nicht beeinträchtigt; es kann deshalb empfehlenswert sein, an die Stelle eines ringförmigen Vorsprungs 112 zwei oder mehr Vorsprünge treten zu lassen, welche (in Umfangsrichtung der Hülse 100) große Lücken zwischen sich bilden.

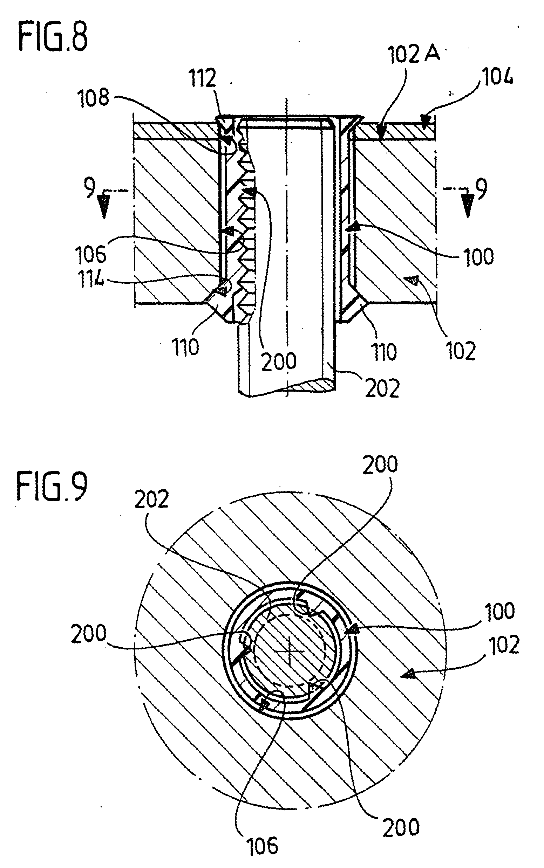

Die Figuren 8 und 9 zeigen eine weitere Ausführungsform der erfindungsgemäßen Vorrichtung, welche den in den Figuren 5 bis 7 dargestellten Ausführungsformen weitgehendst ähnelt, weshalb in den Figuren 8 und 9 dieselben Bezugszeichen wie in den Figuren 5 bis 7 verwendet wurden.

Wie vor allem die Fig. 9 erkennen läßt, sind bei der Ausführungsform nach den Figuren 8 und 9 an den Innenumfang der Hülse 100 jedoch Kunststoffrippen 200 angeformt, welche sich in Längsrichtung der Hülse erstrecken und der Halterung und Ausrichtung eines Gewindeschafts 202 einer Schraube dienen. Der von den Rippen 200 definierte'lichte Innendurchmesser der Hülse 100 ist vorzugsweise etwas kleiner als der Außendurchmesser des Gewindes des Gewindeschafts 202, so daß sich das Schraubengewinde beim Einstecken oder Eindrehen der Schraube in die Hülse 100 geringfügig in die Rippen 200 eingräbt.

Bei der in den Figuren 8 und 9 dargestellten Ausführungsform kann die Hülse 100 so gestaltet sein, daß sie sich erst beim Einbringen des Gewindeschafts 202 in die Hülse so aufweitet, daß die Hülse und damit die Flachdichtung bzw. deren Dichtungsplatte 104 am Maschinenbauteil 102 gesichert wird.

## Patentansprüche

1. Vorrichtung zum Anbringen einer Flachdichtung an einem Maschinenbauteil, wobei die Flachdichtung eine Dichtungsplatte zum Auflegen auf eine Dichtfläche des Maschinenbauteils aufweist, welches mindestens ein in diese Dichtfläche mündendes und sich ungefähr senkrecht zur Dichtfläche erstreckendes Loch aufweist, **gekennzeichnet durch** mindestens ein an der Dichtungsplatte (26) angreifendes, von dieser quer abstehendes und in dieses Loch (36) einsteckbares Sicherungselement (28), welches an seinem Umfang mit mindestens einem für ein derartiges Zusammenwirken mit dem Loch vorgesehenen Vorsprung (44) versehen ist, daß dadurch ein Zurückziehen des Sicherungselements aus dem Loch zumindest erschwert wird.

2. Vorrichtung nach Anspruch 1, **dadurch gekennzeichnet, daß** das Sicherungselement (28) mindestens im Bereich des Vorsprungs (44) entgegen derjenigen Richtung deformierbar ist, in welcher der Vorsprung vorsteht.

3. Vorrichtung nach Anspruch 1 oder 2, **dadurch gekennzeichnet, daß** das Sicherungselement (28) zwei einander gegenüberliegende und voneinander wegweisende Vorsprünge (44) aufweist.

4. Vorrichtung nach einem der Ansprüche 1 bis 3, wobei das Maschinenbauteil mindestens zwei in seine Dichtfläche mündende und im Querabstand voneinander angeordnete Löcher aufweist, **gekennzeichnet durch** wenigstens zwei Sicherungselemente (66, 68), welche für einen Eingriff in jeweils eines dieser Löcher im Querabstand voneinander angeordnet sind.

5. Vorrichtung nach einem der Ansprüche 1 bis 4, **dadurch gekennzeichnet, daß** das Sicherungselement hülsenartig gestaltet ist.

6. Vorrichtung nach Anspruch 5, **dadurch gekennzeichnet, daß** das Sicherungselement zwecks elastischer Verminderung seines Durchmessers in seinem mit dem Vorsprung versehenen Bereich in seiner Längsrichtung geschlitzt ist.

7. Vorrichtung nach Anspruch 6, **dadurch gekennzeichnet, daß** das Sicherungselement von seinem dem Vorsprung benachbarten Ende her geschlitzt ist.

8. Vorrichtung nach Anspruch 7, **dadurch gekennzeichnet, daß** die Länge des geschlitzten Bereichs geringer ist als die Gesamtlänge des Sicherungselements.

9. Vorrichtung nach einem der Ansprüche 6 bis 8, **dadurch gekennzeichnet, daß** das Sicherungselement zwei einander gegenüberliegende Schlitze aufweist.

10. Vorrichtung nach einem der Ansprüche 5 bis 9, **dadurch gekennzeichnet, daß** das Sicherungselement eine als separates Teil hergestellte Hülse ist.

11. Vorrichtung nach Anspruch 10, **dadurch gekennzeichnet, daß** die Hülse eine als Spritzgußteil gestaltete Kunststoff-Hülse ist.

12. Vorrichtung nach Anspruch 10 oder 11, **dadurch gekennzeichnet, daß** die Dichtungsplatte ein ein Einstecken der Hülse in die Dichtungsplatte ermöglichendes Loch aufweist und die Hülse an dem von ihrem der Sicherung dienenden ersten Vorsprung abgewandten Hülsenende mit mindestens einem zweiten Vorsprung zum Hintergreifen der Dichtungsplatte oder des Maschinenbauteils versehen ist.

13. Vorrichtung nach Anspruch 12, wobei das Loch des Maschinenbauteils im Abstand von dessen Dichtfläche eine von letzterer abgewandte Anschlagfläche bildet, **dadurch gekennzeichnet, daß** der in Längsrichtung der Hülse gemessene Abstand des zweiten Vorsprungs vom ersten Vorsprung ungefähr dem Abstand der Anschlagfläche von der Dichtfläche des Maschinenbauteils zuzüglich der Dicke der Dichtungsplatte entspricht.

14. Vorrichtung nach Anspruch 12 oder 13, **dadurch gekennzeichnet, daß** im vorsprungsfreien Bereich der Hülse deren Außendurchmesser dem Durchmesser des Lochs der Dichtungsplatte entspricht.

15. Vorrichtung nach einem der Ansprüche 10 bis 14, **dadurch gekennzeichnet, daß** im vorsprungsfreien Bereich der Hülse deren Außendurchmesser dem Durchmesser des Lochs des Maschinenbauteils entspricht.

16. Vorrichtung nach einem der Ansprüche 5 bis 15, **dadurch gekennzeichnet, daß** das Sicherungselement für die Aufnahme und Ausrichtung eines Gewindeschafts einer Schraube ausgebildet ist.

17. Vorrichtung nach Anspruch 16, **dadurch gekennzeichnet, daß** der lichte Innendurchmesser des Sicherungselements geringfügig kleiner als der Außendurchmesser des Gewindeschafts ist.

18. Vorrichtung nach einem der vorstehenden Ansprüche, **dadurch gekennzeichnet, daß** das Sicherungselement an der Dichtungsplatte fest angebracht ist.

19. Vorrichtung nach einem der Ansprüche 1 bis 18, wobei die Dichtungsplatte eine Ebene der Flachdichtung definiert und das Loch im Abstand von der Dichtfläche des Maschinenbauteils eine von der Dichtfläche abgekehrte Anschlagfläche bildet, **dadurch gekennzeichnet, daß** der senkrecht zur Flachdichtungsebene gemessene Abstand des Vorsprungs (44) von der Dichtungsplatte (26) mindestens gleich dem Abstand der Anschlagfläche (38) von der Dichtfläche (18A') des Maschinenbauteils (18A) ist.

20. Vorrichtung nach einem der Ansprüche 1 bis 19, wobei das Loch das Maschinenbauteil durchsetzt und in eine von der Dichtfläche des Maschinenbauteils abgekehrte zweite Maschinenbauteilfläche mündet, **dadurch gekennzeichnet, daß** der Abstand des Vorsprungs (44) von der Dichtungsplatte (26) mindestens gleich der Länge des Lochs (36) zwischen der Dichtfläche (18A') des Maschinenbauteils (18A) und dessen zweiter Fläche (38) ist.

21. Vorrichtung nach einem der Ansprüche 1 bis 20, **dadurch gekennzeichnet, daß** der von der Dichtungsplatte (26) abstehende Bereich (30, 32, 34) des Sicherungselements (28) von mindestens einer Blechzunge gebildet wird.

22. Vorrichtung nach Anspruch 21, **dadurch gekennzeichnet, daß** die Blechzunge (28) an ihrem freien Ende einen Kopfbereich (34) aufweist, dessen Gestalt einer der folgenden Formen entspricht: Widerhakenform, Pfeilform, Pilzkopfform und Trapezform.

23. Vorrichtung nach Anspruch 21 oder 22, **dadurch gekennzeichnet, daß** die maximale Breite eines an die Dichtungsplatte (26) angrenzenden Fußes (30) der Blechzunge (28) dem Querabstand derjenigen Wandbereiche des Lochs (36) des Maschinenbauteils (18A) entspricht, gegen welche zum Positionieren der Flachdichtung (20A) die Längsränder des Blechzungenfußes (30) anliegen sollen.

24. Vorrichtung nach einem der Ansprüche 21 bis 23, **dadurch gekennzeichnet, daß** die Blechzunge (28) in ihrer Längsrichtung geschlitzt ist.

25. Vorrichtung nach Anspruch 24, **dadurch gekennzeichnet, daß** die Längsränder (40') des Schlitzes (40) der Blechzunge (28) im Querabstand voneinander verlaufen.

26. Vorrichtung nach einem der Ansprüche 21 bis 25, wobei die Dichtungsplatte eine plattenartige Blechlage aufweist, **dadurch gekennzeichnet, daß** die Blechzunge (28) mit der Blechlage (26) einstückig und aus letzterer herausgebogen ist.

27. Vorrichtung nach den Ansprüchen 4 und 21, **dadurch gekennzeichnet, daß** jede der beiden Blechzungen (66, 68) jeweils eine Ebene definiert und daß die beiden Ebenen ungefähr senkrecht zur Ebene der Dichtungsplatte (64) sowie ungefähr senkrecht zueinander verlaufen.

28. Vorrichtung nach einem der Ansprüche 21 bis 26, wobei das Maschinenbauteil im Querabstand von dem Loch für den Eingriff des Sicherungselements ein der Positionierung der Flachdichtung dienendes und in die Dichtfläche des Maschinenbauteils mündendes Loch aufweist, **dadurch gekennzeichnet, daß** an der Dichtungsplatte (64) eine von dieser quer abstehende und als Positionierelement (70) dienende Blechzunge angeordnet ist, wobei die Sicherungselement-Blechzunge (66, 68) und die Positionierelement-Blechzunge (70) jeweils eine Ebene definieren, und daß diese beiden Ebenen ungefähr senkrecht zur Ebene der Dichtungsplatte (64) sowie ungefähr senkrecht zueinander verlaufen.

29. Vorrichtung nach Anspruch 28, wobei die Dichtungsplatte eine plattenartige Blechlage aufweist, **dadurch gekennzeichnet, daß** die Positionierelement-Blechzunge (70) mit der Blechlage (64) einstückig'und aus letzterer herausgebogen ist.

30. Vorrichtung nach Anspruch 28 oder 29, **dadurch gekennzeichnet, daß** der freie Endbereich der Positionierelement-Blechzunge (70) abgerundet ist.

31. Vorrichtung nach einem der Ansprüche 28 bis 30, **dadurch gekennzeichnet, daß** die maximale Breite eines an die Dichtungsplatte (64) angrenzenden Fußes der Positionierelement-Blechzunge (70) dem Querabstand derjenigen Wandbereiche des der Aufnahme der Positionierelement-Blechzunge dienenden Lochs des Maschinenbauteils entspricht, gegen welche zum Positionieren der Flachdichtung die Längsränder der Blechzunge anliegen sollen.
